# FASCICULE DE BREVET EUROPEEN

(11) **EP 0 993 583 B1**
(45) Date de publication et mention de la délivrance du brevet: **06.08.2003**
(21) Numéro de dépôt: 98935061.6
(22) Date de dépôt: 30.06.1998
(51) Int. Cl.: F23N 5/10, F23N 1/00, F16K 5/12

(54) **ROBINET POUR APPAREIL A GAZ, ET PROCEDE DE CALIBRAGE D'UN TEL ROBINET**
VENTIL FÜR EIN GASGERÄT, UND VERFAHREN ZUM KALIBRIEREN EINES SOLCHEN VENTILS
TAP FOR GAS APPARATUS, AND METHOD FOR CALIBRATING SAME

(30) Priorité: 04.07.1997 FR 9708534
(43) Date de publication de la demande: 19.04.2000
(73) Titulaire: Sourdillon, 37250 Veigne (FR)
(72) Inventeur: MOREAU, André, F-37100 Tours (FR)
(74) Mandataire: Gorrée, Jean-Michel
(86) Numéro de dépôt international: FR9801389
(87) Numéro de publication internationale: WO99001700

(56) Documents cités:
- DE-B- 1 284 375
- FR-A- 2 178 306
- FR-E- 27 176
- US-A- 2 299 649

## Description

La présente invention concerne un robinet pour appareil à gaz, et notamment pour appareil de chauffage à catalyse.

Elle vise également un procédé de calibrage d'un tel robinet.

Pour certains appareils à gaz, on utilise des robinets dans lesquels un boisseau conique est réglable en rotation entre une position de puissance nulle (coupure de l'alimentation) et des positions de puissance variable. Le boisseau est sollicité axialement pour avoir contre la paroi de la chambre conique dans laquelle il est monté un appui suffisant pour que l'étanchéité soit assurée lorsque le boisseau est en position de fermeture. Les surfaces coniques sont coûteuse à réaliser, surtout avec la précision requise.

Dans d'autre types d'appareils à gaz, en particulier les appareils à catalyse, le robinet ne comporte pas de position de puissance nulle. La mise à l'arrêt de l'appareil s'obtient en fermant l'arrivée de gaz en amont du robinet. Dans ce cas, ou utilise un robinet moins coûteux car il n'est plus nécessaire de garantir une coupure complète de l'écoulement dans une position d'arrêt. L'organe de réglage peut alors être une tige cylindrique dans laquelle est formée une cavité, qui débouche radialement vers l'extérieur au moyen de trous de passage de différents diamètres. Au cours de la rotation de la tige, ces trous viennent successivement en regard d'un orifice, formé à travers la paroi de l'alésage du corps. Classiquement, les trous de passage sont au nombre de trois. Ainsi, lorsque le trou de plus petit diamètre se trouve en regard de l'orifice de l'alésage, l'appareil fonctionne à puissance minimale; lorsque c'est le trou de diamètre intermédiaire, respectivement de plus grand diamètre, l'appareil fonctionne à puissance moyenne, respectivement maximale.

Dans les robinets de l'art antérieur, il est nécessaire que les différents passages permettant l'écoulement du gaz soient calibrés avec précision pour que le débit de gaz qu'ils transmettent à l'appareil situé en aval procure une puissance qui soit conforme à la puissance imposée par les normes et/ou à la puissance annoncée par le constructeur.

Notamment, les pertes de charge subies par le gaz dans le robinet sont délicates à maîtriser. Cela entraîne des coûts élevés, en raison de la précision des outillages nécessaires, et en raison du nombre important de pièces non conformes mises au rebut.

Le but de la présente l'invention est de proposer un robinet pour appareil à gaz qui ne présente pas les inconvénients ci-dessus énoncés.

Suivant l'invention, le robinet pour appareil à gaz, et notamment pour appareil de chauffage à catalyse, comprenant:
- un corps dans lequel est formé un alésage,
- un premier trajet de gaz qui communique avec l'alésage,
- un second trajet de gaz qui est raccordé avec l'alésage par un orifice formé à travers la paroi latérale de l'alésage,
- et un organe de réglage du débit de gaz distribué, comprenant une tige montée pour tourner à l'intérieur dudit alésage dans une position axiale stable, ladite tige comportant une cavité qui communique avec le premier trajet de gaz et qui est munie de moyens de communication qui partent de la cavité et qui débouchent à travers la paroi latérale de la tige en chevauchant l'orifice selon une aire de coïncidence variable au cours de la rotation de la tige,
est caractérisé en ce que le contour de l'orifice et le contour suivant lequel les moyens de communication débouchent à travers la paroi latérale de la tige sont tels que ladite aire de coïncidence varie de façon continue et progressive au cours de la rotation de la tige à l'intérieur de l'alésage.

Suivant un autre aspect de l'invention, le robinet présente une première et une seconde butées angulaires pour limiter la rotation de la tige à l'intérieur de l'alésage de telle manière que ladite aire de coïncidence varie de façon continue et progressive entre une valeur maximale lorsque la tige est contre la première butée angulaire et une valeur minimale non nulle lorsque la tige est contre la seconde butée angulaire.

Un avantage de l'invention est qu'elle procure une plage continue de puissances d'utilisation de l'appareil au lieu de la seule valeur de puissance intermédiaire proposée par les robinets de l'art antérieur. L'utilisateur peut régler à volonté la puissance de son appareil entre les valeurs minimale et maximale.

Suivant un autre aspect de l'invention, le robinet présente en outre des moyens de calibrage intégrés comprenant des moyens de réglage axial de ladite position axiale stable.

De préférence, la tige bénéficie d'un débattement axial à l'intérieur de l'alésage, et on règle la position axiale stable de la tige par rapport à l'alésage en exploitant ledit débattement. Ce réglage fait varier l'aire de coïncidence entre le débouché des moyens de communication et l'orifice pour chaque position angulaire de la tige. Une fois réglée, la position axiale stable de la tige peut être stabilisée au moyen d'un ressort de rappel qui ramène la tige contre une première butée axiale.

Ainsi, lors de la fabrication du robinet, il n'est pas nécessaire de prévoir des tolérances de fabrication contraignantes en ce qui concerne la position et la section des différents passages de gaz, car le calibrage du robinet est réalisé une fois la tige en place à l'intérieur de l'alésage, par simple réglage de la position axiale stable de la tige à l'intérieur dudit alésage. Les coûts de fabrication sont alors considérablement réduits par rapport aux coûts de fabrication des robinets de l'art antérieur.

Ledit calibrage, effectué pour une position angulaire prédéterminée de la tige, a pour effet de régler en une seule fois le débit minimal, le débit maximal et les débits intermédiaires traversant le robinet, pour les différentes positions angulaires possibles de la tige. On évite ainsi, par une opération simple, le risque de pièces défectueuses produisant des débits situés en-dehors de la plage de tolérance et, en outre, le réglage permet de se rapprocher des valeurs de débit optimales.

Selon un autre aspect de l'invention, lesdits moyens de réglage axial comprennent un palier de butée fixé au corps du robinet, dans une position réglable parallèlement à l'axe de l'alésage.

De préférence, le palier de butée comprend au moins une patte pour sa fixation par vis sur le corps du robinet. Les moyens de réglage axial comprennent une déformabilité de cette patte sous l'action de vissage.

Ainsi la position axiale stable de la tige, obtenue après le calibrage du robinet, est atteinte lorsque ladite tige est en butée axiale contre le palier de butée dont la position est réglable.

Selon l'invention, le procédé de calibrage du robinet comprend les étapes suivantes :
- on raccorde un des trajets de gaz à une source de gaz,
- on raccorde l'autre trajet de gaz à un appareil de mesure du débit de gaz,
- on place la tige de réglage en une position angulaire prédéterminée,
- on ajuste la position axiale du palier de butée par rapport au corps, jusqu'à ce que le débit mesuré à la sortie du robinet atteigne une valeur prédéterminée souhaitée pour ladite position angulaire prédéterminée de la tige.

Selon les besoins ou les usages, la position angulaire prédéterminée de la tige peut être l'une des deux positions dans lesquelles la tige se trouve en butée angulaire ou une position intermédiaire. Le calibrage du robinet se fait alors en se basant sur le débit minimal requis, sur le débit maximal requis, ou bien sur un débit intermédiaire prédéterminé, respectivement. Le gaz utilisé pour le calibrage n'est pas nécessairement combustible.

D'autres particularités et avantages de l'invention apparaîtront encore dans la description ci-après d'un exemple donné à titre non-limitatif. Aux dessins annexés:
- la figure 1 est une vue en coupe axiale d'un robinet selon l'invention, la tige étant représentée dans sa position axiale stable, et dans son orientation correspondant au débit minimal,
- la figure 2 est analogue à la figure 1, la tige étant cette fois en position d'allumage,
- la figure 3 est une vue en coupe axiale du corps du robinet,
- la figure 4 est une coupe transversale du corps du robinet selon le plan de coupe IV-IV de la figure 3,
- la figure 5 est une vue latérale de la tige,
- la figure 6 est une coupe longitudinale de la tige selon VI-VI de la figure 5,
- les figures 7, 9 et 11 sont trois coupes transversales schématiques à travers l'aire de coïncidence entre les moyens de communication de la tige et l'orifice de l'alésage, pour trois positions angulaires de la tige correspondant à trois valeurs de débit de gaz;
- les figures 8, 10 et 12 montrent la situation des figures 7, 9 et 11 respectivement, mais vue selon l'axe de l'orifice,
- les figures 13 et 14 représentent le palier de butée, respectivement en perspective, et en vue de dessous,
- la figure 15 est une coupe transversale du robinet, selon le plan de coupe XV-XV de la figure 1,
- la figure 16 est une coupe latérale partielle montrant la fixation du palier de butée,
- la figure 17 illustre le procédé de calibrage du robinet, et
- la figure 18 illustre l'effet du calibrage sur l'aire de coïncidence.

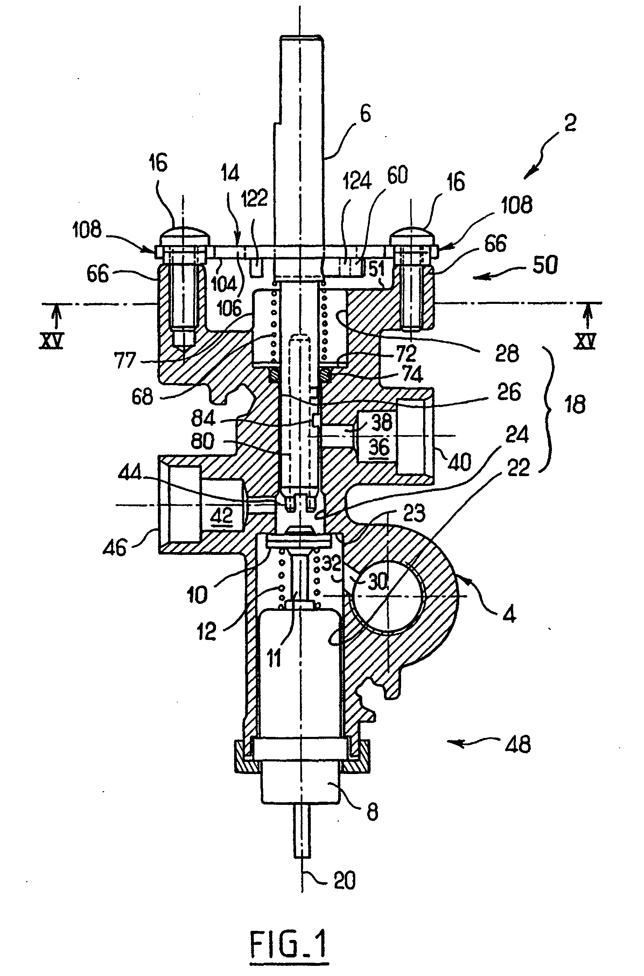

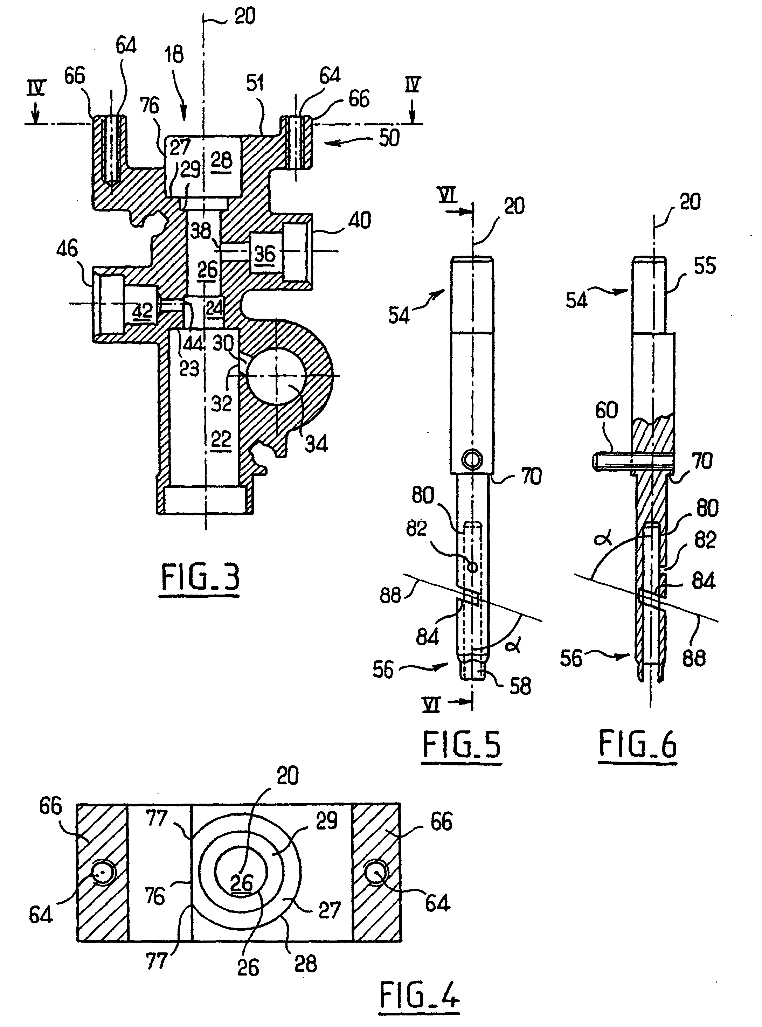

Selon le mode de réalisation illustré aux figures, le robinet 2 comprend (voir par exemple figure 1) un corps 4 dans lequel est formé un alésage 18 (figure 3) d'axe 20, et de section variable. L'alésage 18 comprend ainsi une première portion 22 dans laquelle le corps 8 d'une électrovanne de sécurité est emmanché de manière étanche et fixe, une deuxième portion 24 raccordée à la portion 22 par un épaulement 23 formant siège pour le clapet 10 de l'électrovanne, une troisième portion 26, et une quatrième portion 28.

Le corps 4 présente un trajet 30 d'arrivée de gaz, débouchant par un premier orifice 32 dans la première portion 22 de l'alésage 18 entre le corps 8 de l'électrovanne et le siège 23. En outre, le trajet 30 débouche à l'extérieur du corps 4 par un second orifice 34, qui peut être raccordé, de manière non représentée, à une source de gaz, également non représentée, située en amont du robinet 2 dans l'installation.

Le corps 4 présente un trajet 36 d'évacuation de gaz, débouchant dans la troisième portion 26 de l'alésage 18 par un troisième orifice 38 et à l'extérieur du corps 4 par un quatrième orifice 40, qui peut être raccordé, de manière non représentée, à l'appareil, également non représenté, que le robinet 2 alimente en gaz, et situé en aval du robinet 2 dans l'installation.

Le corps 4 peut présenter un trajet additionnel 42, débouchant dans la deuxième portion 24 de l'alésage 18 par un cinquième orifice 44 et à l'extérieur du corps 4 par un sixième orifice 46, qui peut être raccordé, de manière non représentée, à une veilleuse de l'appareil à alimenter.

Le corps 8 renferme un électro-aimant dont le plongeur 11 porte le clapet 10 rappelé vers son siège 23 par un ressort de rappel 12.

Lorsque le robinet et l'appareil alimenté par celui-ci sont au repos (figure 1), le clapet 10 est maintenu en appui étanche sur son siège 23 par le ressort 12, obturant ainsi le passage du gaz entre le trajet amont 30 d'une part et les deux trajets aval 36 et 42 d'autre part.

Lorsque le clapet 10 est écarté de son siège 23, le gaz arrivant par le trajet 30 passe librement dans le trajet de veilleuse 42. Le gaz passe en outre dans le trajet d'évacuation principal 36 avec un débit qui est déterminé par réglage du positionnement d'une tige de réglage 6 de forme générale cylindrique engagée dans les deuxième, troisième et quatrième positions 24, 26, 28 de l'alésage 18.

Le diamètre de la tige de réglage 6 est déterminé pour que ladite tige de réglage 6 puisse coulisser et tourner de façon ajustée et sensiblement étanche dans la troisième portion 26 de l'alésage 18, où débouche le trajet 36 d'évacuation de gaz.

L'extrémité externe 54 de la tige 6 dépasse de l'alésage 18 à travers une extrémité 50 du corps 4 et à travers une fenêtre 114 d'un palier de butée 14 fixé à l'extrémité 50 du corps 4 par deux vis 16. L'extrémité 54 présente des moyens 55 pour recevoir un bouton (non représenté) ou tout autre dispositif de préhension permettant à l'utilisateur d'enfoncer ladite tige de réglage 6 ou de la faire tourner à l'intérieur de l'alésage 18, pour le réglage du débit de gaz.

La tige de réglage 6 présente un ergot latéral 60 situé entre l'extrémité 50 du corps 4 et le palier de butée 14. L'ergot 60 coopère avec une zone de butée 106 du palier de butée 14 pour réaliser une première butée axiale limitant le coulissement de la tige de réglage 6 dans l'alésage 18 vers l'extérieur du corps 4.

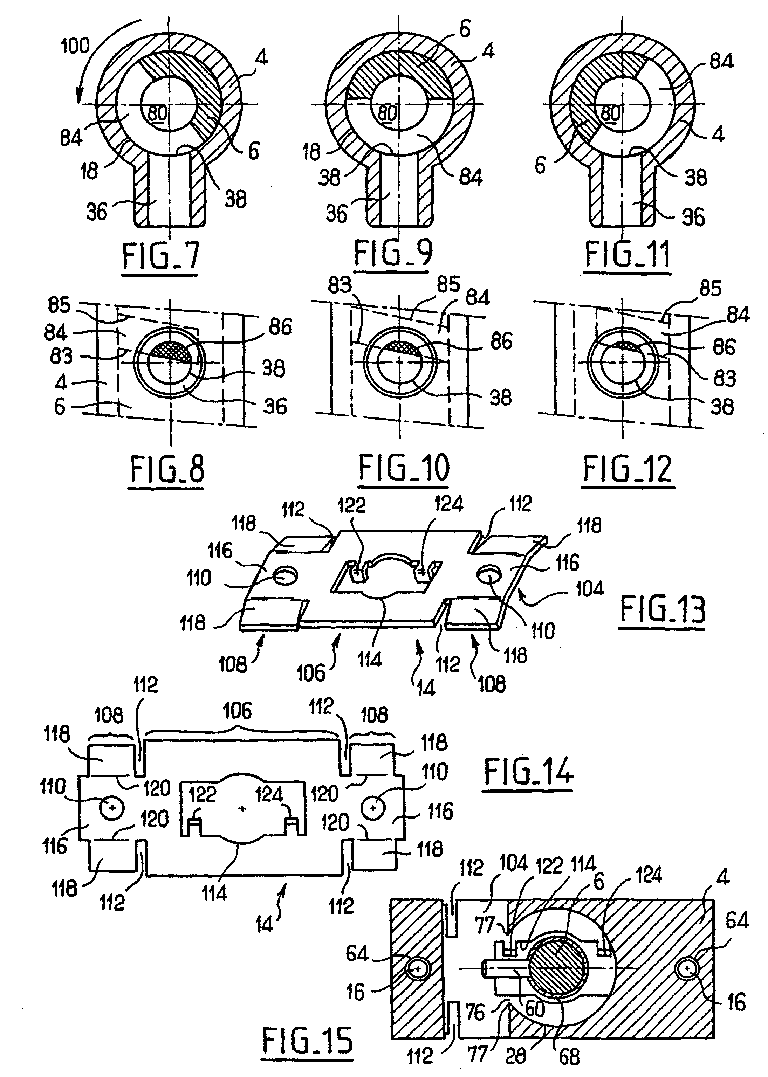

L'ergot 60 coopère également avec une première 122 et une seconde 124 butées angulaires (voir figures 13 à 15) limitant à environ 180° la course en rotation de la tige de réglage 6 à l'intérieur de l'alésage 18. Les butées 122, 124 sont constituées par des languettes du palier de butée 14, formées grâce à un contour approprié de la fenêtre 114 et coudées en direction du corps 4. Pour la majorité de la course angulaire permise à la tige 6 par les butées 122, 124, le débattement axial de la tige 6 vers l'intérieur du corps, est limité par une deuxième butée axiale 51 destinée à recevoir l'appui de l'ergot 60. La butée 51 est constituée par une face du corps 4 située entre des bossages 66 du corps 4 dans lesquels sont formés des alésages filetés 64 recevant les vis 16.

L'ergot 60 peut être formé par exemple par une goupille montée à force dans une perforation diamétrale de la tige 6.

Un ressort de rappel 68, disposé dans la quatrième portion 28 de l'alésage 18, autour de la tige de réglage 6, rappelle la tige de réglage 6 dans sa position axiale stable contre la première butée axiale 106. Le ressort de compression 68 est monté entre d'une part un élément d'arrêt 72 tel que par exemple une rondelle, qui s'appuie sur le fond annulaire 27 de la quatrième portion 28 de l'alésage 18 (voir figure 3), et d'autre part contre un épaulement annulaire 70 (figures 1, 2, 5, 6) de la tige de réglage 6, situé à proximité de l'ergot 60, du côté de l'intérieur du corps 4 par rapport à celui-ci.

En outre, un joint d'étanchéité annulaire 74 est disposé autour de la tige de réglage 6, dans un logement annulaire ménagé dans le corps 4 sous l'élément d'arrêt 72, qui comprime ce joint sous l'action du ressort 68. Ce joint empêche du gaz qui aurait pu passer entre la paroi de la troisième portion 26 et la paroi de la tige, de fuir à l'extérieur du robinet.

La tige de réglage 6 présente une cavité axiale borgne 80 qui débouche à travers l'extrémité interne 56 de la tige 6, de manière à communiquer avec le trajet 30 lorsque le clapet 10 est en position d'ouverture.

Lorsque la tige 6 est dans sa position axiale stable où l'ergot 60 est appuyé contre la première butée axiale 106, une ouverture latérale 84 partant de la cavité 80 et débouchant à travers la paroi latérale de la tige 6, se trouve sensiblement à la hauteur axiale de l'orifice 38.

Lorsqu'on fait tourner la tige de réglage 6 dans sa position axiale stable à l'intérieur de l'alésage 18 entre les deux butées angulaires 122, 124, l'ouverture latérale 84 chevauche le troisième orifice 38 du trajet 36 d'évacuation de gaz (voir figure 1), en définissant entre l'orifice 38 et le contour de l'ouverture 84 sur la paroi latérale de la tige 6 une aire de coïncidence 86 qui varie de façon continue et progressive, comme l'illustrent les figures 7 à 12

Quelle que soit la position angulaire de la tige de réglage 6, il existe une aire de coïncidence 86 non nulle entre l'ouverture latérale 84 et l'orifice 38.

Cette aire est maximale lorsque la tige de réglage 6 est en butée contre la première butée angulaire 122, et minimale lorsque la tige de réglage 6 est en butée contre la seconde butée angulaire 124, en passant de façon continue par une infinité de valeurs intermédiaires. La flèche 100 (figure 7) indique le sens de rotation de la tige de réglage 6 à l'intérieur de l'alésage 18 pour passer de la première à la seconde butée angulaire.

De préférence (figures 1, 2, 5, 6), l'ouverture latérale 84 est conformée en fente à faces parallèles, orientée selon un plan oblique 88 par rapport à l'axe 20 de la tige de réglage 6.

De préférence, le plan oblique 88 forme avec l'axe 20 de la tige de réglage 6, un angle α relativement grand sensiblement compris entre 88 et 89 degrés, par exemple 88°55'.

La fente 84 couvre de préférence sensiblement la moitié de la section de la tige de réglage 6, et la position relative des deux butées angulaires 122, 124 permet à la tige 6 une course angulaire d'environ 180 degrés dans l'alésage 18.

De préférence, l'orifice 38 du trajet d'évacuation 36 présente un contour circulaire.

Comme illustré aux figures 8, 10 et 12, l'aire de coïncidence 86 résultant du chevauchement partiel de la fente 84 et de l'orifice circulaire 38 présente sensiblement une forme de segment de disque. Le bord oblique 83 de l'une des faces de la fente 84 chevauche l'orifice circulaire 38, tandis que le bord oblique 85 de l'autre face reste toujours en-dehors de l'orifice 38, quelle que soit la position angulaire de la tige de réglage 6.

Lorsque la tige de réglage 6 est dans sa position axiale stable, tandis que le clapet 10 est ouvert, le gaz s'introduit dans la cavité 80 de la tige de réglage 6, et de là dans le trajet 36 d'évacuation de gaz par l'ouverture 84.

L'appareil (non représenté) alimenté par le robinet est alors en cours d'utilisation. La chaleur produite par la combustion excite un thermo-couple (non représenté), qui alimente l'électro-aimant 8 pour maintenir le clapet 10 en position d'ouverture. L'utilisateur peut régler le débit d'alimentation en gaz, et donc la puissance de l'appareil, en faisant varier l'aire de coïncidence 86 (figures 7 à 12) par une rotation de la tige de réglage 6 à l'intérieur de l'alésage 18.

Pour éteindre l'appareil consommateur, on coupe l'arrivée de gaz à la source, en amont du robinet. La combustion disparaît dans l'appareil, l'électroaimant 8 n'est donc plus excité et le clapet 10 se ferme. Si la combustion s'interrompt accidentellement, par exemple à cause d'un coup de vent sur l'appareil consommateur, le même phénomène d'interruption de l'excitation de l'électroaimant et donc de fermeture du clapet 10 se produit.

On va maintenant décrire les moyens permettant de mettre l'appareil en fonctionnement.

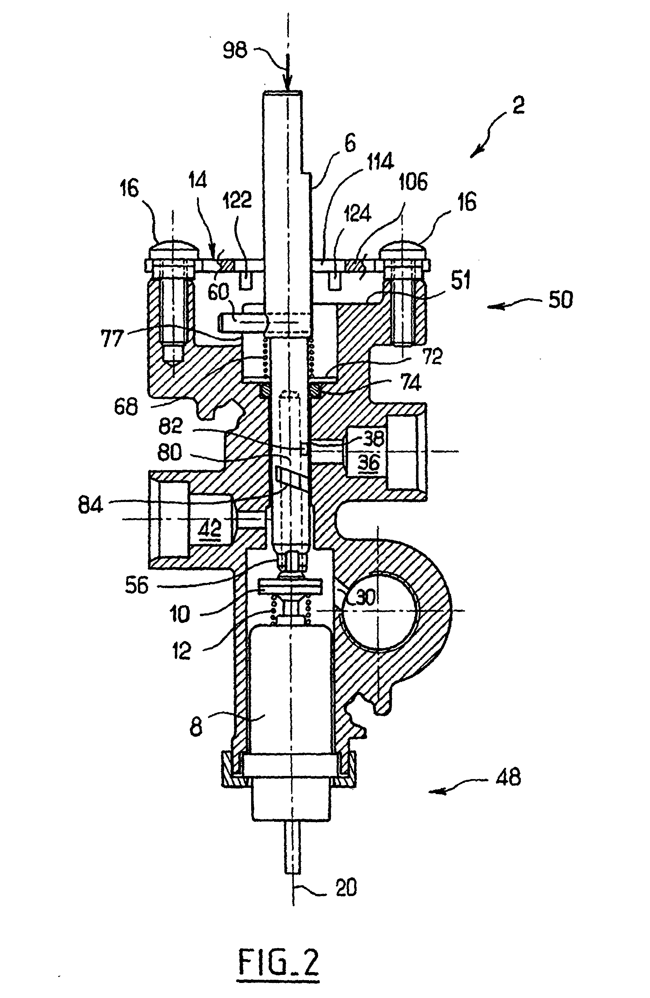

Lorsque la tige 6 est dans sa position angulaire de puissance maximale, dans laquelle l'ergot 60 est adjacent à la première butée angulaire 122, l'ergot 60 peut dépasser la deuxième butée axiale 51 vers l'intérieur du corps 4 en circulant axialement entre deux bords verticaux 77 d'une ouverture latérale 76, en forme de créneau, de la quatrième portion 28 de l'alésage 18. La tige 6 peut ainsi être poussée axialement dans une position-d'allumage (figure 2) dans laquelle un ajutage 82 prévu à travers la tige 6 entre la cavité axiale 80 et la paroi latérale de la tige 6 débouche en regard de l'orifice 38. L'ouverture 84 ne communique plus avec l'orifice 38.

En outre, le mouvement axial de la tige 6 au-delà de la deuxième butée 51 a provoqué l'ouverture du clapet 10 par appui de l'extrémité 56 de la tige 6 sur celui-ci. Ainsi, en position d'allumage, le trajet d'arrivée du gaz 30 communique avec le trajet d'évacuation 36 via la cavité 80 et l'ajutage 82. Une fois que la combustion a commencé dans l'appareil consommateur (non représenté) le thermocouple (non représenté) exposé à la chaleur de combustion produit un courant électrique qui alimente l'électro-aimant 8, lequel maintient le clapet 10 en position d'ouverture même après relâchement de la tige 6. Celle-ci est rappelée dans sa position axiale stable définie par la première butée 106 sous l'action du ressort de rappel 68. Dans cette position, l'ajutage 82 ne communique plus avec l'orifice 38.

Quand l'utilisateur relâche la tige 6 à partir de la position d'allumage, un débit de gaz maximum est aussitôt assuré à travers l'ouverture 84, car la tige revient dans la position stable avec l'ergot 60 en butée contre la première butée angulaire 122.

Le diamètre de la deuxième portion 24 de l'alésage 18 est sensiblement plus grand que celui de la tige de réglage 6. Ainsi, lorsque le clapet 10 est ouvert, le gaz pénètre dans ladite deuxième portion 24 autour de la paroi latérale de l'extrémité interne 56 de la tige de réglage 6, puis pénètre par le cinquième orifice 44 de l'alésage 18 dans le trajet additionnel 42 pour alimenter la veilleuse au moyen d'un raccord non représenté, quelle que soit la position de la tige 6.

On va maintenant décrire les moyens et le procédé permettant de calibrer le robinet.

Le palier de butée 14, illustré aux figures 13, 14 et 16 se présente sous la forme d'une plaquette en acier matricée, de forme générale sensiblement rectangulaire, douée d'une certaine élasticité.

La zone de butée 106 est située entre deux pattes de fixation 108.

Chaque patte de fixation 108 comprend un socle 116 s'étendant dans le prolongement longitudinal de la zone de butée 106. Les socles 116 sont percés d'un trou 110 pour le passage de l'une des vis de fixation 16.

Chaque socle 116 est raccordé selon deux lignes de pliage 120, à deux ailes d'appui opposées 118 qui présentent une inclinaison vers le corps 4 par rapport au plan de la zone de butée 106 et du socle 116. Chaque aile 118 est séparée de la zone de butée 106 par une encoche 112 allant d'un bord du palier de butée 14 jusqu'à la ligne de pliage 120 associée à cette aile 118.

Chaque patte de fixation 108 a ainsi une forme cambrée en toit, qui lui confère des propriétés de déformabilité élastique en réponse à la sollicitation des vis 16, qui est perpendiculaire au plan du socle 116.

Par ailleurs, dans la position axiale stable de la tige 6, le chevauchement entre l'ouverture 84 et l'orifice 38 est tel que l'ouverture 84 est décalée vers le palier de butée 14 par rapport à l'orifice 38. Ainsi, pour chaque orientation angulaire de la tige 6, l'aire de coïncidence 86 serait augmentée si la position axiale stable de la tige était décalée vers l'intérieur du corps 4.

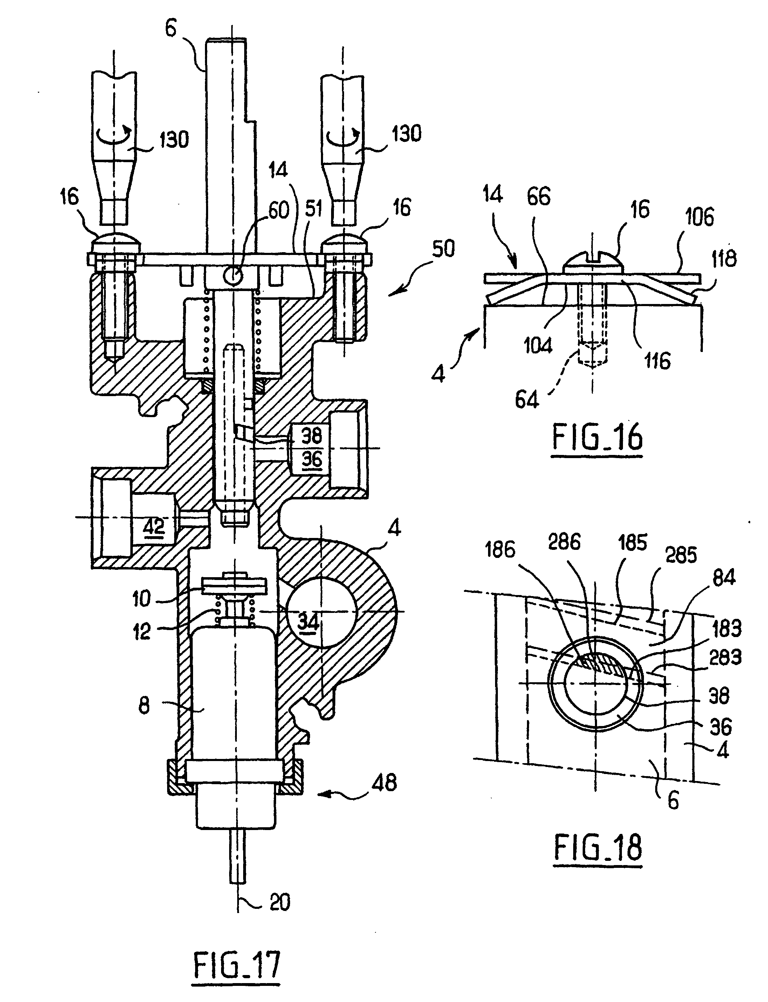

Le procédé de calibrage du robinet 2 est illustré à la figure 17. Il consiste à trouver la position axiale stable de la tige de réglage 6 pour laquelle, dans une position angulaire déterminée de la tige 6, l'aire de coïncidence 86 a les dimensions qu'il faut pour laisser passer le débit de gaz voulu pour cette position angulaire.

Le calibrage du robinet 2 consiste à ajuster la position axiale du palier de butée 14 par rapport au corps 4, dans la mesure permise par la nécessité de maintenir, entre la première et la deuxième butées axiales, un écart axial correspondant à un jeu suffisant pour la libre rotation de l'ergot 60 entre elles.

Le procédé de calibrage du robinet 2 comprend les étapes suivantes :
- on raccorde à une source de gaz le deuxième orifice 34 du trajet d'arrivée de gaz 30,
- on raccorde le quatrième orifice 40 du trajet d'évacuation de gaz 36 à un appareil de mesure du débit de gaz,
- on accouple chaque vis de fixation 16, avec un tournevis 130 pouvant être relié à un moteur commandé, par un asservissement, en fonction de l'écart entre le débit de gaz mesuré et une consigne de débit,
- on alimente l'électro-aimant 8 pour provoquer l'ouverture du clapet 10,
- on place la tige de réglage 6 en une position angulaire prédéterminée, par exemple en première ou en deuxième butée angulaire, ou une position angulaire intermédiaire déterminée comme illustré dans l'exemple de la figure 17,
- on ajuste la position axiale du palier de butée 14 par rapport au corps 4 en serrant progressivement les vis de fixation 16, jusqu'à ce que le débit mesuré à la sortie du robinet 4 atteigne la valeur prédéterminée souhaitée pour ladite position angulaire prédéterminée de la tige de réglage 6.

Lorsque l'on serre progressivement les vis de fixation 16, les pattes de fixation 108 correspondantes subissent une sollicitation parallèle à l'axe 20 du corps 4 (représentée à la figure 17 par la flèche 132), et leur cambrure diminue. Les ailes d'appui 118 qui reposent par leur extrémité libre sur les bossages 66, ont tendance à s'aplatir sur ceux-ci. Les socles 116 se rapprochent des bossages 118 et la zone de butée 106 se rapproche d'une distance sensiblement égale de la deuxième butée axiale 51 du corps 4.

Inversement, lorsque l'on desserre progressivement chaque vis de fixation 16, la patte de fixation 108 tend, par élasticité à retrouver sa configuration de repos (figure 13) et la zone de butée 106 s'éloigne de la butée axiale 51 du corps 4.

La figure 18 illustre l'effet du calibrage sur l'aire de coïncidence 86 qui varie entre un premier segment de disque 186 et un deuxième segment de disque 286. Le bord oblique 83 de la fente 84 balaye l'orifice circulaire 38 entre deux positions 183 et 283, tandis que l'autre bord oblique 85 de la fente se déplace entre deux positions 185 et 285 toutes deux situées en dehors de l'orifice 38.

Le réglage ou le calibrage effectué pour une position angulaire de la tige 6, est valable pour toutes les autres positions angulaires, dont les débits respectifs se trouvent ajustés de manière correspondante, grâce à l'inclinaison bien déterminée de la fente 84. Cette inclinaison peut en effet être très précise sans que cela entraîne des coûts de fabrication élevés.

Bien sûr, l'invention n'est pas limitée au mode de réalisation qui vient d'être décrit et de nombreux aménagements peuvent être apportés à ce mode de réalisation sans sortir du cadre de l'invention.

On pourrait envisager des contours différents à la fois pour l'ouverture 84 et pour l'orifice 38, dès lors que lesdits contours coopérent pour que l'aire de leur coïncidence mutuelle varie de façon continue et progressive au cours de la rotation de la tige de réglage à l'intérieur de l'alésage.

Le trajet additionnel de gaz 42 et la deuxième portion de l'alésage ne sont nécessaires que si l'appareil à alimenter comporte une veilleuse.

L'épaulement 70 n'est pas indispensable, le ressort 68 peut s'appuyer directement sur l'ergot 60 sur un autre ergot diamétralement opposé, réalisé radialement plus court pour ne pas interférer avec les butées angulaires 122 et 124.

## Revendications

1. Robinet pour appareil à gaz, et notamment pour appareil de chauffage à catalyse, comprenant :
- un corps (4) dans lequel est formé un alésage (18),
- un premier trajet (30) de gaz qui communique avec l'alésage (18),
- un second trajet (36) de gaz qui est raccordé avec l'alésage (18) par un orifice (38) formé à travers la paroi latérale de l'alésage (18),
- et un organe de réglage du débit de gaz distribué, comprenant une tige (6) montée pour tourner à l'intérieur dudit alésage (18) dans une position axiale stable, ladite tige (6) comportant une cavité (80) qui communique avec le premier trajet (30) de gaz et qui est munie de moyens de communication (84) qui partent de la cavité (80) et qui débouchent à travers la paroi latérale de la tige (6) en communiquant avec l'orifice (38) selon une aire de coïncidence (86) variable au cours de la rotation de la tige (6) dans la position axiale stable
**caractérisé en ce que** le contour de l'orifice (38) et le contour (83, 85) suivant lequel les moyens de communication (84) débouchent à travers la paroi latérale de la tige (6) sont tels que ladite aire de coïncidence varie de façon continue et progressive au cours de la rotation de la tige (6) à l'intérieur de l'alésage (18).

2. Robinet selon la revendication 1, **caractérisé en ce qu'**il possède une première (122) et une seconde (124) butées angulaires pour limiter la rotation de la tige (6) à l'intérieur de l'alésage (18) de telle manière que ladite aire de coïncidence (86) varie de façon continue et progressive entre une valeur maximale lorsque la tige (6) est contre la première butée angulaire (122) et une valeur minimale non nulle lorsque la tige (6) est contre la seconde butée angulaire (124).

3. Robinet selon la revendication 2, **caractérisé en ce que** la course en rotation de la tige (6) à l'intérieur de l'alésage entre les deux butées angulaires (122, 124) est d'environ 180°.

4. Robinet selon la revendication 1, 2 ou 3, **caractérisé en ce que** les moyens de communication (84) comprennent une fente orientée selon un plan oblique (88) par rapport à l'axe (20) de la tige (6).

5. Robinet selon la revendication 4, **caractérisé en ce que** l'angle d'inclinaison dudit plan oblique (88) par rapport à l'axe (20) de la tige (6) est sensiblement compris entre 88 et 89 degrés.

6. Robinet selon la revendication 4 ou 5, **caractérisé en ce que** la fente présente des bords (83, 85) parallèles.

7. Robinet selon la revendication 1, 2 ou 3, **caractérisé en ce que** les moyens de communication (84) comprennent une ouverture qui chevauche l'orifice (38) de manière variable d'une extrémité à l'autre de la course angulaire de la tige (6) dans sa position axiale stable.

8. Robinet selon l'une quelconque des revendications 1 à 7, **caractérisé en ce que** la tige (6) bénéficie à l'intérieur de l'alésage d'un débattement axial limité par une première butée axiale (106), et **en ce qu'**il présente un ressort de rappel (68) qui ramène la tige en appui contre la première butée axiale dans ladite position axiale (106) stable de la tige par rapport à l'alésage (18).

9. Robinet selon l'une quelconque des revendications précédentes, **caractérisé en ce qu'**il présente en outre des moyens de calibrage intégrés comprenant des moyens (108) de réglage axial de ladite position axiale stable.

10. Robinet selon la revendication 9, **caractérisé en ce que** lesdits moyens de réglage axial comprennent un palier de butée (14) fixé au corps (4) du robinet, dans une position réglable parallèlement à l'axe (20) de l'alésage (18).

11. Robinet selon la revendication 10, **caractérisé en ce que** le palier de butée comprend au moins deux pattes (108) pour sa fixation par des vis (16) sur le corps (4) du robinet, et **en ce que** les moyens de réglage axial comprennent une déformabilité des pattes (108) sous l'action desdites vis.

12. Robinet selon la revendication 11, **caractérisé en ce que** pour leur déformabilité les pattes (108) ont une forme cambrée.

13. Robinet selon la revendication 10, 11 ou 12, **caractérisé en ce que** le palier (14) comprend une zone de butée (106) présentant une fenêtre (114) traversée par une partie de la tige (6) qui sort de l'alésage (18), et **en ce que** la zone de butée coopère avec au moins un ergot (60) disposé sur la paroi latérale de la tige (6) pour réaliser la première butée axiale.

14. Robinet selon la revendication 13, **caractérisé en ce que** des butées angulaires (122, 124) sont disposées sur le palier de butée (14) autour de la fenêtre (114) pour coopérer avec l'ergot (60).

15. Robinet selon l'une quelconque des revendications 10 à 14, **caractérisé en ce que** le corps (4) du robinet présente autour d'une extrémité de l'alésage (18), qui est en regard du palier de butée (14), une face (51) qui forme deuxième butée axiale limitant le débattement axial de la tige (6) à partir de la première butée axiale (106).

16. Robinet selon l'une quelconque des revendications 10 à 15, **caractérisé en ce que** le palier de butée (14) est réalisé sous la forme d'une plaquette en acier matricée.

17. Robinet selon l'une quelconque des revendications 1 à 16, **caractérisé en ce que**, pour une position angulaire déterminée de la tige (6), celle-ci peut coulisser axialement dans l'alésage (18) jusqu'à une position d'allumage éloignée de la position axiale stable, et **en ce que** ladite tige présente un ajutage (82) qui fait communiquer ledit orifice (38) du corps avec la cavité (80) de la tige (6) lorsque la tige est en position d'allumage.

18. Robinet selon l'une quelconque des revendications 1 à 16, **caractérisé en ce que** la tige (6) présente un ajutage (82) qui communique avec la cavité (80) et qui se trouve en regard de l'orifice (38) du corps, pour une position d'allumage donnée de la tige en rotation et en translation.

19. Procédé de calibrage d'un robinet selon l'une quelconque des revendications 10 à 16, **caractérisé en ce qu'**il comprend les étapes suivantes :
- on raccorde un (30) des trajets de gaz à une source de gaz,
- on raccorde l'autre trajet de gaz (36) à un appareil de mesure du débit de gaz,
- on place la tige de réglage (6) en une position angulaire prédéterminée,
- on ajuste la position axiale du palier de butée (14) par rapport au corps (4), jusqu'à ce que le débit mesuré à la sortie du robinet atteigne une valeur prédéterminée souhaitée pour ladite position angulaire prédéterminée de la tige.

## Patentansprüche

1. Ventil für ein Gasgerät und insbesondere für ein Katalyt-Heizgerät, umfassend:
- einen Körper (4), in dem eine Bohrung (18) gebildet ist,
- einen mit der Bohrung (18) kommunizierenden ersten Gasweg (30),
- einen zweiten Gasweg (36), der durch eine in der Seitenwand der Bohrung (18) gebildete Durchgangsöffnung (38) mit der Bohrung (18) verbunden ist,
- und ein Organ zum Einstellen der Durchflussmenge von zugeführtem Gas, das eine Spindel (6) aufweist, die auf solche Weise gelagert ist, dass sie in der Bohrung (18) in eine stabile axiale Position gedreht werden kann, wobei die Spindel (6) eine Vertiefung (80) hat, die mit dem ersten Gasweg (30) kommuniziert und mit Kommunikationsmitteln (84) versehen ist, die an der.Vertiefung (80) beginnen und durch die Seitenwand der Spindel (6) hindurch münden, wobei sie nach Maßgabe einer Kongruenzfläche (86), die mit dem Verlauf der Drehung der Spindel (6) in die stabile axiale Position veränderbar ist, mit der Öffnung (38) kommunizieren,
**dadurch gekennzeichnet, dass** die Außenlinie der Öffnung (38) und die Außenlinie (83, 85), gemäß welcher die Kommunikationsmittel (84) durch die Seitenwand der Spindel (6) münden, so gestaltet sind, dass die Kongruenzfläche im Verlaufe der Drehung der Spindel (6) in der Bohrung (18) kontinuierlich und allmählich variiert.

2. Ventil nach Anspruch 1, **dadurch gekennzeichnet, dass** dieses einen ersten (122) und einen zweiten (124) winkelförmigen Anschlag aufweist, um die Drehung der Spindel (6) in der Bohrung (18) in der Weise zu begrenzen, dass die Kongruenzfläche (86) kontinuierlich und allmählich zwischen einem Maximalwert, bei dem die Spindel (6) an dem ersten winkelförmigen Anschlag (122) anliegt, und einem nicht Null betragenden Minimalwert, bei dem die Spindel (6) an dem zweiten winkelförmigen Anschlag (124) anliegt, variiert.

3. Ventil nach Anspruch 2, **dadurch gekennzeichnet, dass** die Drehbewegung der Spindel (6) in der Bohrung (18) zwischen den beiden winkelförmigen Anschlägen (122, 124) etwa 180° beträgt.

4. Ventil nach Anspruch 1, 2 oder 3, **dadurch gekennzeichnet, dass** die Kommunikationsmittel (84) einen Schlitz umfassen, der bezogen auf die Achse (20) der Spindel (6) gemäß einer schiefen Ebene (88) gerichtet ist.

5. Ventil nach Anspruch 4, **dadurch gekennzeichnet, dass** der Neigungswinkel der schiefen Ebene (88) bezogen auf die Achse (20) der Spindel (6) ungefähr zwischen 88 und 89 Grad enthalten ist.

6. Ventil nach Anspruch 4 oder 5, **dadurch gekennzeichnet, dass** der Schlitz parallele Ränder (83, 85) ausweist.

7. Ventil nach Anspruch 1, 2 oder 3, **dadurch gekennzeichnet, dass** die Kommunikationsmittel (84) eine Öffnung aufweisen, die sich von einem zu dem anderen Ende der Winkelbewegung der Spindel (6) in ihre stabile axiale Position veränderbar mit der Öffnung (38) überlappt.

8. Ventil nach einem der Ansprüche 1 bis 7, **dadurch gekennzeichnet, dass** die Spindel (6) in der Bohrung von einem axialen Durchfederungsweg profitiert, der durch einen ersten axialen Anschlag (106) begrenzt wird, und dass sie eine Rückstellfeder (68) aufweist, die die Spindel in deren bezogen auf die Bohrung (18) stabilen axialen Position (106) wieder zur Anlage an dem ersten axialen Anschlag bringt.

9. Ventil nach einem der vorhergehenden Ansprüche, **dadurch gekennzeichnet, dass** dieses ferner integrierte Kalibrierungsmittel aufweist, umfassend Mittel (108) zur axialen Einstellung der stabilen axialen Position.

10. Ventil nach Anspruch 9, **dadurch gekennzeichnet, dass** die Mittel für die axiale Einstellung ein an dem Körper (4) des Ventils befestigtes Axiallager (14) in einer parallel zur Achse (20) der Bohrung (18) einstellbaren Position umfassen.

11. Ventil nach Anspruch 10, **dadurch gekennzeichnet dass** das Axiallager wenigsten zwei Lappen (108) für seine Befestigung mittels Schrauben (16) an dem Körper (4) des Ventils hat und dass die Mittel für die axiale Einstellung eine Verformbarkeit der Lappen (108) unter der Wirkung der Schrauben vorsehen.

12. Ventil nach Anspruch 11, **dadurch gekennzeichnet, dass** die Lappen (108) für ihre Verformbarkeit eine gewölbte Form besitzen.

13. Ventil nach Anspruch 10, 11 oder 12, **dadurch gekennzeichnet, dass** das Lager (14) eine Anschlagzone (106) mit einem Fenster (114) aufweist, durch welches ein aus der Bohrung (18) hervortretender Abschnitt der Spindel (6) hindurchtritt, und dass die Anschlagzone mit wenigstens einem an der Seitenwand der Spindel (6) vorgesehenen Vorsprung (60) zusammenwirkt, um den ersten axialen Anschlag zu realisieren.

14. Ventil nach Anspruch 13, **dadurch gekennzeichnet, dass** die winkelförmigen Anschläge (122, 124) an dem Axiallager (14) um das Fenster (114) vorgesehen sind, um mit dem Vorsprung (60) zu kooperieren.

15. Ventil nach einem der Ansprüche 10 bis 14, **dadurch gekennzeichnet, dass** der Körper (4) des Ventils um ein dem Axiallager (14) gegenüberstehendes Ende der Bohrung (18) eine Fläche (51) aufweist, die einen zweiten axialen Anschlag bildet, der den axialen Durchfederungsweg der Spindel (6) ab dem ersten axialen Anschlag (106) begrenzt.

16. Ventil nach einem der Ansprüche 10 bis 15, **dadurch gekennzeichnet, dass** das Axiallager (14) in Form einer Platte aus Matrizenstahl realisiert ist.

17. Ventil nach einem der Ansprüche 1 bis 16, **dadurch gekennzeichnet, dass** sich die Spindel (6) bei einer bestimmten Winkelposition in der Bohrung (18) axial bis zu einer von der stabilen axialen Position entfernten Zündposition verschieben kann und dass die Spindel ein Mundstück (82) aufweist, das die Öffnung (38) des Körpers mit der Vertiefung (80) der Spindel (6) kommunizieren lässt, wenn sich die Spindel in Zündposition befindet.

18. Ventil nach einem der Ansprüche 1 bis 16, **dadurch gekennzeichnet, dass** die Spindel (6) ein Mundstück (82) aufweist, das bei einer durch die Drehung und Translation der Spindel gegebenen Zündposition mit der Vertiefung (80) kommuniziert und der Öffnung (38) des Körpers gegenüberliegt.

19. Verfahren zum Kalibrieren eines Ventils nach einem der Ansprüche 10 bis 16, **dadurch gekennzeichnet, dass** dieses die folgenden Schritte umfasst:
- das Verbinden eines (30) der Gaswege mit einer Gasquelle,
- das Verbinden des anderen Gasweges (36) mit einem Gerät zum Messen der Gasdurchflussmenge,
- das Anordnen der Einstellspindel (6) in einer vorgegebenen Winkelposition,
- das Justieren der axialen Position des Axiallagers (14) in Bezug auf den Körper (4), bis die am Auslass des Ventils gemessene Durchflussmenge einen für die vorgegebene Winkelposition der Spindel gewünschten vorgegebenen Wert erreicht.

## Claims

1. Tap for gas apparatus and in particular for catalytic heating apparatus, comprising:
- a body (4) with a bore (18) formed therein,
- a first gas flow path (30) communicating with the bore (18),
- a second gas flow path (36) which is connected to the bore (18) via an orifice (38) passing through the side wall of the bore (18),
- and an element for regulating the flow of gas distributed, comprising a rod (6) mounted inside said bore (18) so as to rotate into a stable axial position, said rod (6) having a cavity (80) which communicates with the first gas flow path (30) and which is provided with communication means (84) starting from the cavity (80) and passing through the lateral wall of the rod (6) to communicate with the orifice (38) depending ona variable region of overlap (86) as the rod (6) rotates into the stable axial position,
**characterised in that** the contour of the orifice (38) and the contour (83, 85) along which the communication means (84) passes through the side wall of the rod (6) such that said region of overlap varies continuously and progressively as the rod (6) rotates inside the bore (18).

2. Tap as claimed in claim 1 **characterised in that** it has a first (122) and a second (124) angular stop to restrict the rotation of the rod (6) inside the bore (18) so that said region of overlap (86) varies continuously and progressively between a maximum value when the rod (6) sits against the first angular stop (122) and a minimum value that is not zero when the rod (6) sits against the second angular stop (124).

3. Tap as claimed in claim 2, **characterised in that** the rotation path of the rod (6) inside the bore between the two angular stops (122, 124) is approximately 180°.

4. Tap as claimed in claim 1, 2 or 3, **characterised in that** the communication means (84) has a slot oriented along an oblique plane (88) relative to the axis (20) of the rod (6).

5. Tap as claimed in claim 4, **characterised in that** the angle of inclination of said oblique plane (88) relative to the axis (20) of the rod (6) is essentially between 88 and 89 degrees.

6. Tap as claimed in claim 4 or 5, **characterised in that** the slot has parallel edges (83, 85).

7. Tap as claimed in claim 1, 2 or 3, **characterised in that** the communication means (84) has an orifice which straddles the orifice (38) in a variable manner from one end of the path across which the rod (6) travels into its stable axial position to the other.

8. Tap as claimed in any one of claims 1 to 7,
**characterised in that** the rod (6) effects an axial displacement inside the bore restricted by a first axial stop (106) and has a return spring (68) which pushes the rod back into abutment with the first axial stop when the rod is in said stable axial position (106) relative to the bore (18).

9. Tap as claime d in any one of the preceding claims, **characterised in that** it additionally has integrated calibration means comprising means (108) for axially adjusting said stable axial position.

10. Tap as claimed in claim 9, **characterised in that** said axial adjusting means have a thrust block (14) fixed to the body (4) of the tap, in a position adjustable parallel with the axis (20) of the bore (18).

11. Tap as claimed in claim 10, **characterised in that** the thrust block has at least two tabs (108) so that it can be fixed by screws (16) to the body (4) of the tap and the means of axial adjustment is a deformability of the tabs (108) under the action of said screws.

12. Tap as claimed in claim 11, **characterised in that** the tabs (108) are of a cambered shape to render them deformable.

13. Tap as claimed in claim 10, 11 or 12, **characterised in that** the bearing (14) has a thrust zone (106) with a window (114) through which a part of the rod (6) emerging from the bore (18) passes and this thrust zone co-operates with at least one lug (60) disposed on the side wall of the rod (6) in order to provide the first axial stop.

14. Tap as claimed in claim 13, **characterised in that** angular stops (122, 124) are disposed on the thrust bearing (14) around the window (114) to co -operate with the lug (60).

15. Tap as claimed in any one of claims 10 to 14, **characterised in that**, around one end of the bore (18) facing the thrust stop (14), the body (4) of the tap has a face (51) which forms a second axial stop restricting the axial displacement of the rod (6) away from the first axial stop (106).

16. Tap as claimed in any one of claims 10 to 15, **characterised in that** the thrust bearing (14) is provided in the form of a drop-forged steel plate.

17. Tap as claimed in any one of claims 1 t o 16, **characterised in that** when the rod (6) is in a given angular position, it is able to slide axially in the bore (18) as far as an ignition position remote from the stable axial position and said rod has a nozzle (82) which places said orifice (38) of the body in communication with the cavity (80) of the rod (6) when the rod is in the ignition position.

18. Tap as claimed in any one of claims 1 to 16, **characterised in that** the rod (6) has a nozzle (82) which communicates with the cavity (80) and which is disposed facing the orifice (38) of the body when the rod is displaced in rotation and in translation to assume a given ignition position.

19. Method of calibrating a tap as claimed in any one of claims 10 to 16, **characterised in that** it comprises the following steps:
- one (30) of the gas flow paths is connected to a gas source,
- the other gas flow path (36) is connected to an apparatus for measuring the gas flow rate,
- the adjusting rod (6) is placed in a predetermined angular position,
- the axial position of the thrust bearing (14) is adjusted relative to the body (4) until the flow rate measured at the outlet of the tap reaches a desired predetermined value for said predetermined angular position of the rod.
